# EUROPÄISCHE PATENTSCHRIFT

(11) **EP 0 849 271 B1**
(45) Veröffentlichungstag und Bekanntmachung des Hinweises auf die Patenterteilung: **07.08.2002**
(21) Anmeldenummer: 97118692.9
(22) Anmeldetag: 28.10.1997
(51) Int. Cl.: C07F 7/18

(54) **Kontinuierliches Verfahren zur Herstellung von gamma- Aminopropyltrialkoxysilanen**
Continuous process for preparing aminopropyl trialkoxysilanes
Procédé continu pour la production d'aminopropyl trialkoxysilanes

(30) Priorität: 18.12.1996 DE 19652642
(43) Veröffentlichungstag der Anmeldung: 24.06.1998
(73) Patentinhaber: Degussa AG, 40474 Düsseldorf (DE)
(72) Erfinder: Balduf, Torsten, Dr., 63755 Alzenau (DE); Wieland, Stefan, Dr., 63069 Offenbach (DE); Lortz, Wolfgang, Dr., 63607 Wächtersbach (DE); Pohlisch, Joachim, Dr., 63571 Gelnhausen-Meerholz (DE); Göbel, Thomas, Dr., 63457 Hanau (DE); Grethe, Horst, 63457 Hanau (DE)

(56) Entgegenhaltungen:
- DE-A- 2 753 124

## Beschreibung

Die Erfindung betrifft ein Verfahren zur Herstellung von γ-Aminopropyltrialkoxysilanen, insbesondere γ- Aminopropyltriethoxysilanen,sowie Gemischen von primären und sekundären Aminosilanen durch Umsetzung von γ-Chlorpropyltrialkoxysilan mit Ammoniak unter Druck.

Diese Umsetzung ist dem Prinzip nach bekannt. Sie wurde jedoch bisher nur batchweise durchgeführt (DE-052749316, DE-052753124).

Gegenstand der Erfindung ist ein kontinuierliches Verfahren zur Herstellung von γ-Aminopropyltrialkoxysilanen sowie Gemischen von primären und sekundären Aminosilanen durch Umsetzung von γ-Chlorpropyltrialkoxysilan mit Ammoniak, dadurch gekennzeichnet, daß man
a) γ-Chlorpropyltrialkoxysilan und Ammoniak zunächst im gewünschten Mengenverhältnis mischt,
b) dieses einphasige Gemisch auf die Reaktionstemperatur aufheizt,
c) mit einer für die vollständige Umsetzung ausreichenden Verweilzeit einen Druckreaktor durchlaufen läßt,wobei das Gemisch gegebenenfalls mehrere Temperaturzonen durchläuft.
d) das Reaktionsgemisch anschließend abkühlt, gegebenenfalls ein organisches Lösungsmittel (Extraktionsmittel) zusetzt,
e) das Produkt (γ-Aminopropyltrialkoxysilane bzw. die Gemische) aus dem sich bildenden zweiphasigen Gemisch gegebenenfalls durch Extraktion abtrennt und
f) die ammoniakalische Phase in den Reaktor (c) oder in Schritt (a) zurückführt.

Das erfindungsgemäße Verfahren führt im Vergleich zu batch-Verfahren bei gleichem Ammoniaküberschuß zu einem geringeren Hold-up in der Anlage. Dadurch ist es möglich, höhere Ammoniaküberschüsse einzusetzen und so die Produktzusammensetzung gezielt in Richtung primärer Amine zu verschieben, wenn dies gewünscht wird.
Die erfindungsgemäße Umsetzung läuft ebenso wie das Mischen der Komponenten und die Extraktion unter Druck ab.
Im allgemeinen arbeitet man bei einem Druck von 5 bis 60 bar, bevorzugt 40 bis 60 bar für die Reaktion und bevorzugt 5 bis 30 bar für die Extraktion.
Die Reaktionstemperatur beläuft sich auf 50 bis 170 ° C, insbesondere 60 bis 110 °C, gegebenenfalls unter Durchlaufen unterschiedlicher Temperaturzonen. Bei Temperaturen bis 110 ° C bleibt die Reaktion zum Teil auf der Stufe des γ-Aminopropyltrialkoxysilanhydrochlorides stehen. Dadurch wird die Bildung des sekundären Amins (Bis-(trialkoxysilylpropyl)amin) reduziert und die Selektivität zum primären Amin erhöht. Bei Temperaturen >110 ° C setzt sich das γ-Aminopropyltrialkoxysilanhydrochlorid mit Ammoniak zu Ammoniumchlorid und γ-Aminopropyltrialkoxysilan um, so daß man die Reaktion vorteilhaft in einem Reaktor mit mindestens zwei Temperaturzonen durchführt (<110 °C, >110 °C).
Besonders vorteilhaft ist die Umsetzung des Hydrochlorides mit Ammoniak nach vollständigem Umsatz des γ-Chlorpropyltrialkoxysilans, da dann γ-Aminopropyltrialkoxysilan besonders selektiv hergestellt werden kann.

Als Alkoxyverbindungen wählt man kurzkettige Alkoxy-, bevorzugt die Ethoxy- oder die Methoxyverbindungen aus. Sie sind im homogenen Ausgangsgemisch, das dem Reaktor zugeführt wird, in Bezug auf den flüssig eingespeisten Ammoniak in einem molaren Verhältnis von 1:10 bis 1:300, insbesondere 1:30 bis 1:100 enthalten. Das heißt, daß Ammoniak immer in einem deutlichen Überschuß vorliegt.

Die Bildung der primären Aminosilane erfolgt bevorzugt bei höheren Ammoniaküberschüssen (1 : 30 und höher), während sich bei Überschüssen im Bereich von 1 : 10 primäre und sekundäre Aminosilane in vergleichbaren Mengenanteilen bilden.
Auch diese Gemische sind von wirtschaftlichem Interesse.

Durch die Recyclierung von zumindest einem Teil des mit Ammoniumchlorid beladenen Ammoniaks (Schritt f, ammoniakalische Phase) stellt sich in dem Reaktor eine bestimmte Ammoniumchloridkonzentration ein.

Diese ist über die Menge der recyclierten Phase zu steuern und sollte so bemessen sein, daß kein Feststoff ausfällt und das Gemisch während der Reaktion einphasig bleibt. Bei zweiphasiger Reaktionsführung erhöht sich der Anteil sekundärer und tertiärer Amine im Produkt.
Bevorzugt wählt man eine Ammoniumchlorid-Konzentration von bis zu 55 Gew.%, insbesondere 10 bis 40 Gew.-%, bezogen auf die Menge des Reaktionsgemischs im Reaktor.

Der Typ des zu verwendenden Reaktors ist nicht auf bestimmte Ausführungsformen beschränkt. Sie müssen allerdings eine für die Reaktion ausreichende Verweilzeit, Durchmischung und Wärmeübertragung, gewährleisten.
Bevorzugt setzt man Rohrreaktoren oder Kolonnen mit Füllkörpern oder strukturierten Packungen ein.

Je nach Gehalt an Ammoniumchlorid bilden sich beim Abkühlen des Reaktionsgemisches am Reaktorausgang auf 10 bis 60 ° C bereits zwei Phasen aus, so daß die Abtrennung des gewünschten Produkts in einem einstufigen Extraktor (Mischer-Settler) erfolgen kann.

Die eine Phase enthält hauptsächlich das Produkt, während die andere im wesentlichen aus Ammoniak und Ammoniumchlorid besteht und recycliert wird.

Diese einstufige Variante kommt bevorzugt bei Ammoniumchloridkonzentrationen von ca. 25 Gew.-% und höher, bezogen auf das Reaktionsgemisch zum Tragen.

Die Trennung in zwei Phasen kann durch den Zusatz z. B. von Alkanen wie n-Hexan oder n-Heptan verstärkt werden.

Bei Gehalten von ca. 25 Gew.-% und kleiner tritt die Phasentrennung nicht mehr allein aufgrund der Temperaturabsenkung ein, sondern muß durch die Zugabe der obengenannten organischen Lösungsmittel verstärkt bzw. bewirkt werden.

In diesem Fall benötigt man einen mehrstufigen Extraktor.

In einer bevorzugten Ausführungsform schleust man nach der Abtrennung der das Produkt bzw. die Produktmischung gegebenenfalls auch organische Lösungsmittel enthaltenden Phase einen Teilstrom der ammoniakalischen Phase aus.Der Teilstrom wird direkt entspannt, der freigewordene Ammoniak wieder kondensiert und verdichtet, in den Prozeß zurückgeführt (Schritt a) oder c)) und das ausgefallene Ammoniumchlorid abgetrennt.

Bei dieser Variante kann die organische Phase aus der Extraktionsstufe direkt destillativ aufbereitet werden. Zunächst wird das Extraktionsmittel unter Vakuum abgetrennt und anschließend die Aminosilane isoliert. Dies kann man nach Durchführung des erfindungsgemäßen Verfahrens deshalb besonders kosteneffektiv durchführen, weil die gewünschten Aminosilane bzw. deren Gemische zu einem sehr hohen Prozentsatz in dem Reaktionsgemisch enthalten sind.

Gemäß einer weiteren vorteilhaften Variante zweigt man bereits vor der Abkühlung des Reaktionsgemischs einen Teilstrom ab und bringt diesen mit der das Produkt bzw. Produktgemisch enthaltenden Phase nach Schritt e) drucklos oder bei einem Druck bis zu 10 bar in Kontakt.

Dabei bilden sich Brüden, bestehend aus Ammoniak und dem verwendeten organischen Lösungsmittel, die in einer Kolonne aufgetrennt und an den entsprechenden Stellen in den Prozeß zurückgeführt werden.

Bei einem Gehalt von 10 bis 40 Gew.-% Ammoniumchlorid im Reaktionsgemisch schleust man, bezogen auf das Gesamtvolumen dieses Gemisches, 5 bis 30 Vol.-%, dieses Gemisches aus.
Das Reaktionsgemisch enthält Ammoniak, Ammoniumchlorid und die Aminosilane sowie gegebenfalls nicht umgesetztes Chloralkylsilan.

Die flüchtigen Bestandteile, wie z. B. Ammoniak werden so aus dieser Phase entfernt, das Ammoniumchlorid fällt in fester Form an und kann mit bekannten Maßnahmen aus der organischen Phase abgetrennt werden.

Nach der Abtrennung des Feststoffes aus der organischen Phase unterwirft man das Filtrat der bereits beschriebenen Destillation bei Unterdruck.
Da man den zurückzuführenden Teil der ammoniakalischen Phase (Schritt f)) gemäß Erfindung flüssig zurückführt, verringert sich im Vergleich zur batchweisen Herstellung die Menge des zu verdampfenden Ammoniaks.

### Beispiele

### Beispiel 1

Man erhält γ-Aminopropyltriethoxysilan bei einem γ-Chlorpropyltriethoxysilan-Ammoniak-Verhältnis von 1 : 100 bei p = 50 bar, einer ersten Reaktion bei 100 °C und einer Nachreaktion bei 120 ° C in einer Ausbeute von bis zu 95 %, bezogen auf das erhaltene Rohsilangemisch aus primären, sekundären und tertiären Aminosilanen.
Bei Einsatz von γ-Chlorpropyltriethoxysilan und Ammoniak im Verhältnis 1 : 11 bei P = 56 bar und T = 95 ° C beträgt die typische Zusammensetzung des Produktes 48,7 Gew.-% primäres und 46,5 Gew.-% sekundäres und 4,8 Gew.-% tertiäres Aminosilan.

### Beispiel 2

Bei einer Ammoniumchloridkonzentration von 45 Gew.-%, bezogen auf die ammoniakalische Phase werden 0,212 kg/h Ammoniak und 0,028 kg/h Aminosilan mit 0,084 kg/h n-Heptan in einem Mischer vermengt. Bei 20 ° C und 8,6 bar werden 97,8 % des eingesetzten Aminosilans mit der organischen Phase aus einem einstufigen Extraktor ausgetragen.

### Beispiel 3

Bei 25 Gew.-% Ammoniumchlorid in der ammoniakalischen Phase wird die Extraktion bei einem Produktstrom von 0,335 kg/h Ammoniak und 0,044 kg/h Aminosilan in einer Extraktionskolonne bei 60 ° C und 26 bar durchgeführt. Bei einem n-Heptanstrom von 0,335 kg/h werden in der Extrakphase 96,2 % des eingesetzten Aminosilans ermittelt.

## Patentansprüche

1. Kontinuierliches Verfahren zur Herstellung von γ-Aminopropyltrialkoxysilanen sowie Gemischen von primären und sekundären Aminosilanen durch Umsetzung von γ-Chlorpropyltrialkoxysilan mit Ammoniak,
**dadurch gekennzeichnet, daß** man
a) γ-Chlorpropyltrialkoxysilan und Ammoniak zunächst im gewünschten Mengenverhältnis mischt,
b) dieses Gemisch auf die Reaktionstemperatur aufheizt,
c) mit einer für die vollständige Umsetzung ausreichenden Verweilzeit einen Druckreaktor durchlaufen läßt,wobei das Gemisch mehrere Temperaturzonen durchlaufen kann,
d) das Reaktionsgemisch anschließend abkühlt, gegebenenfalls ein organisches Lösungsmittel (Extraktionsmittel) zusetzt,
e) das Produkt (γ-Aminopropyltrialkoxysilane bzw. die Gemische) aus dem gebildeten zweiphasigen Gemisch gegebenenfalls durch Extraktion abtrennt und
f) die ammoniakalische Phase in den Reaktor (c)oder a) zurückführt.

2. Verfahren gemäß Anspruch 1,
**dadurch gekennzeichnet, daß** man die Reaktion bei einer Temperatur von 50 bis 170 ° C durchführt.

3. Verfahren gemäß Anspruch 2,
**dadurch gekennzeichnet, daß** man eine Reaktion in einer ersten Temperaturzone bei 60 bis 110 ° C ablaufen läßt und das entstandene γ-Aminopropyltrialkoxysilanhydrochlorid mit Ammoniak in einer zweiten Temperaturzone bei >110 ° C zu γ-Aminopropyltrialkoxysilan und Ammoniumchlorid umsetzt.

4. Verfahren gemäß Anspruch 1,
**dadurch gekennzeichnet, daß** man nach Schritt e)einen Teilstrom abzweigt, das entstandene Ammoniumchlorid abtrennt und den Ammoniak in Schritt a) zurückführt.

5. Verfahren gemäß Anspruch 1,
**dadurch gekennzeichnet, daß** man am Reaktorausgang einen Teilstrom vor Schritt d)abzweigt und diesen gegebenefalls mit der abgekühlten und abgetrennten, das Produkt bzw. Produktgemisch enthaltenden, gegebenenfalls durch Extraktion gewonnenen Phase in Kontakt bringt.

6. Verfahren gemäß Anspruch 1,
**dadurch gekennzeichnet, daß** man das Zweiphasengebiet durch Temperaturabsenkung und/oder Zugabe eines organischen Lösungsmittels (Extraktionsmittel), einstellt.

7. Verfahren gemäß Anspruch 6,
**dadurch gekennzeichnet, daß** man als Extraktionsmittel ein flüssiges Alkan einsetzt.

8. Verfahren gemäß Anspruch 7,
**dadurch gekennzeichnet, daß** man n-Hexan oder n-Heptan einsetzt.

9. Verfahren gemäß Anspruch 1,
**dadurch gekennzeichnet, daß** man das γ-Chlorpropyltrialkoxysilan und den Ammoniak in einem molaren Verhältnis von 1:10 bis 1:300 einsetzt.

10. Verfahren gemäß Anspruch 9,
**dadurch gekennzeichnet, daß** das molare Verhältnis sich auf 1 : 30 bis 1 : 100 beläuft

11. Verfahren gemäß einem oder mehreren der Ansprüche 1 und 4 bis 10,
**dadurch gekennzeichnet, daß** man die Umsetzung in Gegenwart von bis zu 55 Gew.-% Ammoniumchlorid durchführt.

12. Verfahren gemäß einem oder mehreren der Ansprüche 1 bis 11,
**dadurch gekennzeichnet, daß** man γ-Chlorpropyltriethoxisilan oder -trimethoxisilan umsetzt.

## Claims

1. A continuous process for preparing γ-aminopropyltrialkoxysilanes and mixtures of primary and secondary amino silanes by reacting γ-chloropropyltrialkoxysilane with ammonia, **characterized in that**
a) γ-chloropropyltrialkoxysilane and ammonia are first mixed in the desired proportions,
b) this mixture is heated to the reaction temperature and
c) passed through a pressure reactor with a dwell time sufficient for complete reaction, it being possible for the mixture to pass through two or more temperature zones,
d) the reaction mixture is then cooled, and an organic solvent (extractant) is added if desired,
e) the product (γ-aminopropyltrialkoxysilanes and/or the mixtures) is separated from the two-phase mixture formed, by extraction if desired, and
f) the ammoniacal phase is returned to the reactor (c) or a).

2. A process according to claim 1, **characterized in that** the reaction is conducted at a temperature of from 50 to 170°C.

3. A process according to claim 2, **characterized in that** a reaction is caused to proceed in a first temperature zone at from 60 to 110°C and in a second temperature zone at > 110°C the resulting γ-aminopropyltrialkoxysilane hydrochloride is reacted with ammonia to give γ-aminopropyltrialkoxysilane and ammonium chloride.

4. A process according to claim 1, **characterized in that** after step e) a substream is diverted off, the ammonium chloride formed is separated off and the ammonia is returned to step a).

5. A process according to claim 1, **characterized in that** at the exit from the reactor a substream is diverted off before step d) and is contacted if desired with the cooled phase which has been separated off, comprises the product or product mixture and was obtained if desired by extraction.

6. A process according to claim 1, **characterized in that** the two-phase region is brought about by lowering the temperature and/or adding an organic solvent (extractant).

7. A process according to claim 6, **characterized in that** a liquid alkane is used as extractant.

8. A process according to claim 7, **characterized in that** n-hexane or n-heptane is used.

9. A process according to claim 1, **characterized in that** the γ-chloropropyltrialkoxysilane and the ammonia are used in a molar ratio of from 1:10 to 1:300.

10. A process according to claim 9, **characterized in that** the molar ratio is from 1:30 to 1:100.

11. A process according to one or more of claims 1 and 4 to 10, **characterized in that** the reaction is conducted in the presence of up to 55% by weight of ammonium chloride.

12. A process according to one or more of claims 1 to 11, **characterized in that** γ-chloropropyltriethoxysilane or γ-chloropropyltrimethoxysilane is reacted.

## Revendications

1. Procédé continu de préparation de γ-aminopropyltrialcoxysilanes, ainsi que de mélanges d'aminosilanes primaires et secondaires, par réaction d'un γ-chloropropyltrialcoxysilane avec de l'ammonlac, **caractérisé en ce que**
a) tout d'abord, on mélange selon la proportion pondérale voulue le γ-chloropropyltrialcoxysilane et l'ammoniac,
b) on chauffe ce mélange à la température de réaction,
c) on le fait passer à travers un réacteur sous pression, pendant un temps de séjour suffisant pour une conversion complète, le mélange pouvant passer par plusieurs zones de température,
d) puis on refroidit le mélange réactionnel, on ajoute éventuellement un solvant organique (agent d'extraction),
e) par extraction, on sépare éventuellement, du mélange diphasique formé, le produit (γ-aminopropyltrialcoxysilanes ou les mélanges), et
f) on renvoie la phase ammoniacale dans le réacteur (c) ou (a).

2. Procédé selon la revendication 1, **caractérisé en ce qu'**on met en oeuvre la réaction à une température de 50 à 170°C.

3. Procédé selon la revendication 2, **caractérisé en ce qu'**on laisse se dérouler une réaction dans une première zone à une température de 60 à 110°C et, dans une deuxième zone à une température supérieure à 110°C, on fait réagir le chlorhydrate de γ-aminopropyltrialcoxysilane formé, pour donner le γ-aminopropyltrialcoxysilane et du chlorure d'ammonium.

4. Procédé selon la revendication 1, **caractérisé en ce qu'**on soutire après l'étape e) un courant partiel, on sépare le chlorure d'ammonium qui s'est formé, et on renvoie l'ammoniac dans l'étape a).

5. Procédé selon la revendication 1, **caractérisé en ce que**, en sortie du réacteur, on soutire un courant partiel avant l'étape d), et on met éventuellement ce dernier en contact avec la phase refroidie et séparée, contenant le produit ou le mélange de produits et éventuellement obtenue par extraction.

6. Procédé selon la revendication 1, **caractérisé en ce qu'**on ajuste le domaine diphasique par un abaissement de la température et/ou par addition d'un solvant organique (agent d'extraction).

7. Procédé selon la revendication 6, **caractérisé en ce qu'**on utilise en tant qu'agent d'extraction un alcane liquide.

8. Procédé selon la revendication 7, **caractérisé en ce qu'**on utilise du n-hexane ou du n-heptane.

9. Procédé selon la revendication 1, **caractérisé en ce qu'**on utilise le γ-chloropropyltrialcoxysilane et l'ammoniac selon un rapport en moles de 1:10 à 1:300.

10. Procédé selon la revendication 9, **caractérisé en ce que** le rapport en moles est de 1:30 à 1:100.

11. Procédé selon l'une ou plusieurs des revendications 1 et 4 à 10, **caractérisé en ce qu'**on met en oeuvre la réaction en présence d'une quantité de chlorure d'ammonium allant jusqu'à 55 % en poids.

12. Procédé selon l'une ou plusieurs des revendications 1 à 11, **caractérisé en ce qu'**on fait réagir du γ-chloropropyltriéthoxysilane ou du γ-chloropropyltriméthoxysilane.
